# EUROPÄISCHE PATENTSCHRIFT

(11) **EP 1 498 369 B1**
(45) Veröffentlichungstag und Bekanntmachung des Hinweises auf die Patenterteilung: **02.04.2008**
(21) Anmeldenummer: 04016500.3
(22) Anmeldetag: 13.07.2004
(51) Int. Cl.: B65G 33/02, B65G 47/26, A22C 15/00, B65G 33/32, B65G 33/34

(54) **Transportvorrichtung zum Transportieren von an Schlaufen hängenden Gegenständen**
Conveyor for conveying objects suspended from hangers
Dispositif de transport pour transporter d'objets suspendus sur des tringles

(30) Priorität: 16.07.2003 DE 10332329
(43) Veröffentlichungstag der Anmeldung: 19.01.2005
(73) Patentinhaber: Poly-clip System GmbH & Co. KG, 60489 Frankfurt am Main (DE)
(72) Erfinder: Sames, Jörg, 35418 Alten Büseck (DE)
(74) Vertreter: Fritsche, Rainer

(56) Entgegenhaltungen:
- WO-A-95/21116
- DE-A- 4 244 220
- DE-A- 10 152 926
- DE-B- 1 214 611
- GB-A- 1 007 510
- GB-A- 1 304 209
- US-A- 2 987 170
- US-A- 3 083 816

## Beschreibung

Die Erfindung betrifft eine Transportvorrichtung zum Transportieren von an Schlaufen oder dergleichen hängenden Gegenständen, insbesondere wurstförmigen Verpackungen gemäß dem Oberbegriff des Anspruchs 1.

In der Wurstproduktion ist es bekanntermaßen üblich, dass die Füllung einer zu bildenden Wurst über ein Füllrohr in ein einseitig verschlossenes schlauch- oder beutelartiges Verpackungsmaterial gefördert wird. Nach Abschluss des Füllvorgangs wird mittels zweier sog. Verdrängerbleche ein füllgutfreier Zopfabschnitt gebildet. Auf diesem Zopfabschnitt werden so dann zwei Verschlussmittel, sog. Clips, angebracht, welche das Verpackungsmaterial auf beide Seiten des Zopfabschnitts verschließen. Danach wird dieser durchtrennt. Soll die Wurst später z.B. zum Zweck des Räucherns oder der Aufbewahrung aufgehängt werden, wird ferner z.B. eine Aufhängeschlaufe zugeführt dergestalt, dass sie beim Setzen des Clips von diesem umschlossen und somit an der Wurst befestigt wird.

Unter Schlaufen sind im Sinne dieser Erfindung alle Mittel zu verstehen, an denen sich Gegenstände aufhängen lassen.

Viele Wurstprodukte werden anschließend beispielsweise in einer Rauchkammer weiter verarbeitet. Hierzu müssen die Würste an ihren Schlaufen vereinzelt so aufgehängt werden, dass sie sich nach Möglichkeit nicht berühren. Der Automatisierungsgrad ist auf diesem Gebiet der Technik nicht sehr weit fortgeschritten, so dass heute noch Rauchstäbe von Hand mit Würsten bestückt werden.

Eine Ausnahme bildet die aus der DE 34 37 830 bzw. DE 38 06 467 bekannte Vorrichtung, mittels der die von einem Aufnehmer eingefädelten Schlaufen über einen pneumatisch linear angetriebenen Schlitten auf eine in der vertikalen Ebene umlaufende Endloskette übergeben werden. Die Würste werden an diesen Schlaufen hängend von der oberen Hälfte der Kette abtransportiert. Durch eine zeitlich getaktete Hin- und Herbewegung des Schlittens können die Würste gleichmäßig beabstandet auf der Kette vereinzelt werden.

Ist die Kette über einen bestimmten Bereich ihrer Gesamtlänge befüllt, so wird eine 180°-Schwenkbewegung des Kettenantriebs um dessen Längsachse veranlasst, wodurch ein die vormals untere Hälfte der Kette umschließender Rauchstab nach oben geschwenkt wird, so dass die Schlaufen von der vormals oberen Hälfte der Kette auf den Rauchstab übergeben werden und auf diesem zu liegen kommen.

Nachteilig bei einer derartigen Vorrichtung ist jedoch, dass die Ausgestaltung einerseits des Schlittens mit Mitteln zur Übergabe der von dem Aufnehmer angereichten Wurst auf die Kette und andererseits des Schwenkmechanismus zur Übergabe der Wurst von der Kette auf den Rauchstab sehr aufwendig ist. Ferner ist nachteilig, dass der Rauchstab eine spezielle und somit kostspielige Anfertigung ist, die zugleich der Abdeckung der unteren Hälfte der Kette dient. Und nicht zuletzt ist nachteilig, dass der Antrieb der Kette diskontinuierlich ist: die Kette wird bis zu ihrer vollständigen Beladung angetrieben, anschließend angehalten, woraufhin eine 180°-Schwenkbewegung des gesamten Kettenantriebs ausgeführt wird. Dies erfordert einen erheblichen mechanischen Aufwand und verlangsamt den Förderprozess.

Eine andere Vorrichtung zum Transportieren von Ketten mehrerer aneinanderhängender Würste ist aus der DE 32 38 023 bekannt. Bei dieser Vorrichtung ist ein Transportband vorgesehen, auf dem die Wurstkette in eine Richtung transportiert wird. An dieses Transportband schließt sich eine Transportschnecke an, die an einem Exzenterarm schwenkbar angelenkt ist und an die die Wurstketten übergeben werden. Dies geschieht, indem die Würste der Wurstketten durch die Schwerkraft bedingt am Ende des Transportbands nacheinander nach unten fallen und durch die Relativbewegung des Transportbandes zur Transportschnecke quer zu deren Förderrichtung darüber gehängt werden. Ferner können die Wurstketten am Ende der Transportschnecke aufgrund deren ausladender Exzenterbewegung nur durch Herunterfallen auf einen synchron linear ausfahrbaren Rauchstab übergeben werden.

Beide Übergabeverfahren sind jedoch bei geschlossenen Schlaufen, an denen einzelne Würste oder Wurstketten aufgehängt werden, nicht möglich. Ferner bedarf es hierfür jeweils eines erhöhten mechanischen Aufwands, da die verschiedenen Bewegungen von Transportband, Transportschnecke und Rauchstab synchronisiert werden müssen. Schließlich ist das Absetzen der Wurstkette auf den Rauchstab nicht sehr präzise.

Aus der deutschen Auslegeschrift 12 14 611, die den nächstkommenden Stand der Technik bildet, von dem die vorliegende Erfindung ausgeht, geht unter anderem ein Spiralförderer für an Kleiderhaken aufgehängte Kleiderstücke hervor. Hierbei ist die Welle durchgehend mit einer Schnecke versehen, so dass die Welle dieser vorbekannten Transportvorrichtung ausschließlich eine einzige Förderausgestaltung, nämlich die der Schnecke aufweist. Die Lagerböcke für die Welle besitzen darüber hinaus noch jeweils einen Spalt zum Durchführen der Kleiderhaken.

Aufgabe der Erfindung ist es daher, eine Transportvorrichtung der eingangs genannten Art zu schaffen, die einfach in ihrer Ausgestaltung ist und die einen prozesssicheren und beschädigungsfreien Transport der Gegenstände gewährleistet.

Die vorstehende Aufgabe wird durch die Merkmale des Anspruchs 1 gelöst. In den sich daran anschließenden Unteransprüchen 2 bis 14 finden sich vorteilhafte Ausgestaltungen hierzu.

Erfindungsgemäß weist die Welle einen nachstehend zweiten) Abschnitt mit einer überwindbaren Zwangsführung für die Schlaufe oder dergleichen auf. Dies kann vorzugsweise dadurch erreicht werden, dass eine spiralförmige Einkerbung um den Umfang der Welle mit in stumpfem Winkel gegenüber der Wellenoberfläche in axialer Richtung auslaufenden Flanken vorgesehen ist. Wird eine an einer Schlaufe hängende Wurst in einer solchen Einkerbung in axialer Richtung durch Drehung der Welle transportiert, und stößt diese Wurst dabei an ein Hindernis, so kann die Schlaufe über die Flanke aus der Einkerbung relativ leicht herausrutschen. Auf diese Weise können Würste beispielsweise zunächst auf dem zweiten Abschnitt der Welle gesammelt werden, um beispielsweise den durch die Herstellung bedingten zuführseitigen Takt bei der Übernahme der Würste mit dem durch eine Abnahmevorrichtung bedingten Takt bei der Abgabe der Würsten zu synchronisieren. Ferner können auf diese Weise bestimmte Abstände zwischen zwei aufeinanderfolgenden Würsten (Teilung) eingestellt werden. Eine bestimmte Teilung kann zusätzlich oder separat durch eine vorausgewählte Drehzahl und/oder durch eine vorausgewählte Steigung der spiralförmigen Einkerbung eingestellt werden.

Weiterhin sind, wie auch bei de Transportvorrichtung der eingangs genannten Art, die Antriebsmittel und die Lagermittel so angeordnet, dass ein Antriebsmoment über den Außenumfang der Schnecke eingeleitet und die Welle über den Außenumfang der Schnecke abgestützt wird. Hierdurch ist es möglich, dass ein selbst an einer geschlossenen Schlaufe oder dergleichen aufgehängter Gegenstand auf dem Kern der Welle hängend über deren gesamte Länge transportiert und an deren Anfang und Ende koaxial übergeben werden kann, da kein auf dem Transportumfang der Welle von außen angreifender Antriebs- oder Lagermechanismus - wie beispielsweise der aus der DE 32 38 023 bekannte Exzenterarm - den Transport der Schlaufe behindert. Der Transport geschieht dabei, indem die Schlaufe von den Flanken der Schnecke durch deren Drehung zwangsweise in eine Richtung befördert wird. Das Antriebsmoment hingegen wird über den Außenumfang der Schnecke eingeleitet, d.h. ohne mit den Schlaufen oder dergleichen in Berührung zu kommen oder deren Transportweg abzuschneiden. Das gleiche gilt entsprechend für die Lagerung der Welle.

Bei der erfindungsgemäßen Transportvorrichtung kommt es in erster Linie nicht auf die Form, Tiefe oder Breite der Gänge zwischen zwei benachbarten Windungen der Schnecke, die Form der Flanken der Schnecke, das Verhältnis von Wellendurchmesser zu Außendurchmesser der Schnecke oder die Steigung der Schnecke an. So kann z. B. die Form einer Förderschnecke mit einer Welle und einem schraubenförmig angeschweißten Blech, oder die eines z.B. trapezförmigen, einstückig an die Welle angeformten Schraubengewindes gewählt werden.

In einer vorteilhaften Ausgestaltung umfassen die Antriebsmittel eine Antriebsrolle mit einer außenumfänglichen Kontaktfläche zur reibschlüssigen Einleitung des Antriebsmoments. Dies hat den Vorteil, dass die Antriebrolle permanent mit ihrer Kontaktfläche an dem Außenumfang der Schnecke anliegt und somit zugleich eine Führung der Welle bewirkt.

Alternativ können die Antriebsmittel auch ein Antriebsritzel umfassen und der Außenumfang der Schnecke wenigstens einen axialen Abschnitt mit einer umfänglichen Verzahnung aufweisen, der formschlüssig mit dem Antriebsritzel in Eingriff steht. Dies hat den Vorteil, dass der Antrieb keinen nennenswerten Schlupf verursacht. Dafür ist dieser Antrieb geräuschvoller und bietet nicht den Vorteil einer Führung der Welle.

In einer weiteren bevorzugten Ausführungsform weist die Transportvorrichtung zwei Lagerrollen auf, die so angeordnet sind, dass die Welle über den Außenumfang der Schnecke auf den Umfangsflächen der Lagerrollen abgestützt ist.

Durch diese Maßnahme wird eine Lagerung der Welle gewährleistet, die ebenfalls keine Behinderung des Transports der Schlaufen auf dem Kern der Welle darstellt. Sie ist allerdings nur eine von mehreren Alternativen. Gleichsam ist es beispielsweise möglich, die Welle an dem Außenumfang der Schnecke in einem beispielsweise zweigeteilten Gleitlager zu lagern. Das Gleitlager würde dann zentral unterhalb der Welle einen Spalt zum Durchführen der auf dem Kern der Welle laufenden Schlaufe aufweisen. Diese Ausführungsform hat gegenüber der Rollenlagerung jedoch einen erhöhten Verschleiß und eine erhöhte Geräuschbildung zum Nachteil. Auch die Anordnung von mehr als insgesamt 3 Rollen ist möglich. Prinzipiell können die Lagerrollen zusammen mit der Antriebsrolle eine beliebige Anordnung um die Welle einnehmen. Bevorzugt ist jedoch der Zwischenwinkel zwischen zwei umfänglich benachbarten Rollen kleiner als 180°, damit die Welle radial sicher fixiert ist. Ferner ist es vorteilhaft, die Lagerrollen symmetrisch unterhalb der Welle und die Mittelachse der Antriebsrolle zentrisch über der Welle anzuordnen.

Das Sammeln der Würste geschieht vorzugsweise durch wenigstens einen Stopper, der im Bereich des zweiten Abschnitts der Welle zwischen einer ersten Position, in der er in den Transportweg der Transportvorrichtung eingreift, und einer zweiten Position, in der er den Transportweg freigibt, hin und her bewegbar ist. Anstelle eines Stoppers können zwei oder mehrere getaktete Stopper vorgesehen werden, die wechselseitig in den Transportweg eingreifen und so die herantrarisportierten Würste vereinzeln.

Weitere Aufgaben, Merkmale und Vorteile der Erfindung werden nun anhand von Ausführungsbeispielen mit Hilfe der Zeichnungen näher erläutert. Es zeigen:
- Fig. 1: eine Seitenansicht eines ersten Abschnitts der Welle sowie einer Antriebs- und Lagerrollenanordnung gemäß einer ersten Ausführungsform der erfindungsgemäßen Transportvorrichtung;
- Fig. 2: eine Vorderansicht der Anordnung aus Fig. 1;
- Fig. 3: eine Seitenansicht eines zweiten und dritten Abschnitts der Welle gemäß einer weiteren Ausführungsform der erfindungsgemäßen Transportvorrichtung;
- Fig.4: eine Teilschnittdarstellung einer axialen Drehlagerung am zuführseitigen Ende der Welle;
- Fig. 5: eine Seitenansicht eines Ausführungsbeispiels des abführseitigen Endes der Welle;
- Fig. 6: eine Teilschnittdarstellung des Ausführungsbeispiels des abführseitigen Endes der Welle aus Fig. 5; und
- Fig. 7: eine Teilschnittdarstellung eines anderen Ausführungsbeispiels des abführseitigen Endes der Welle.

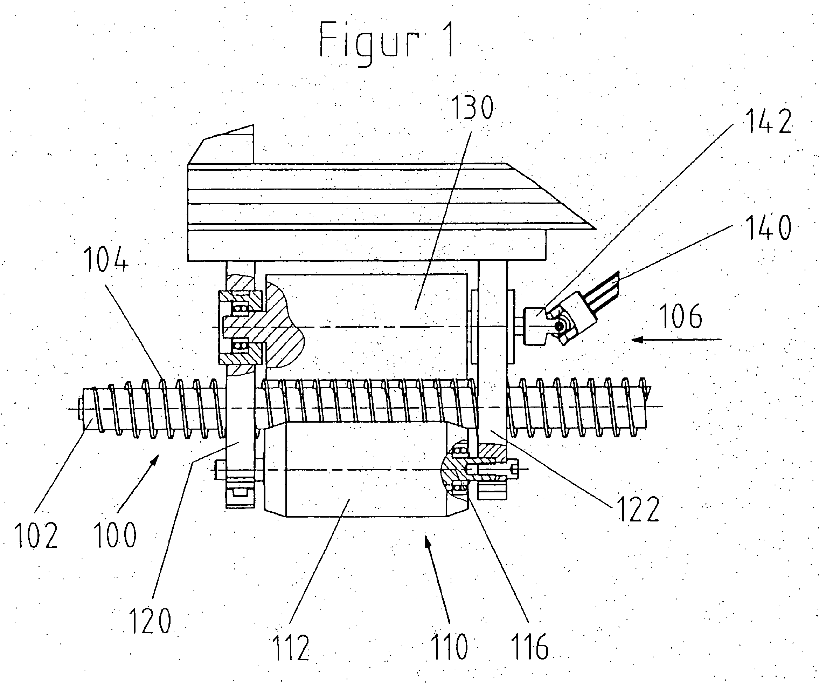

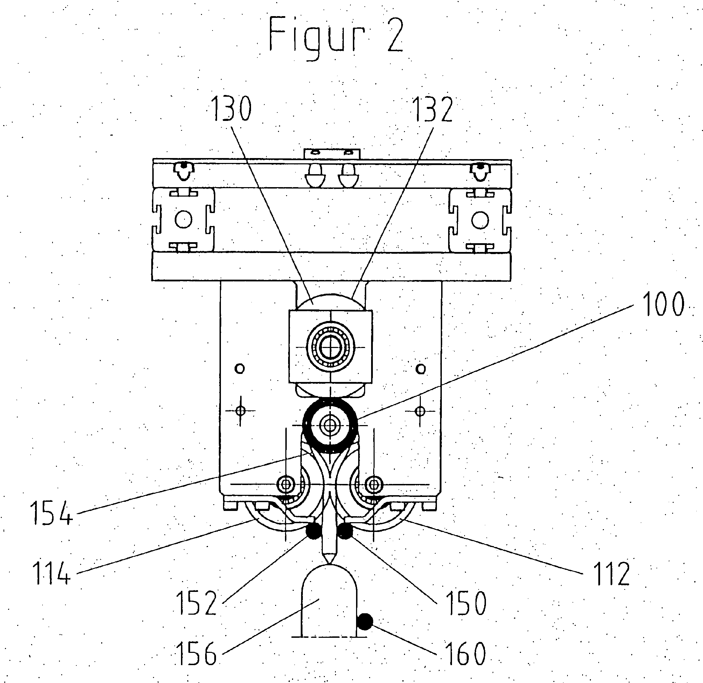

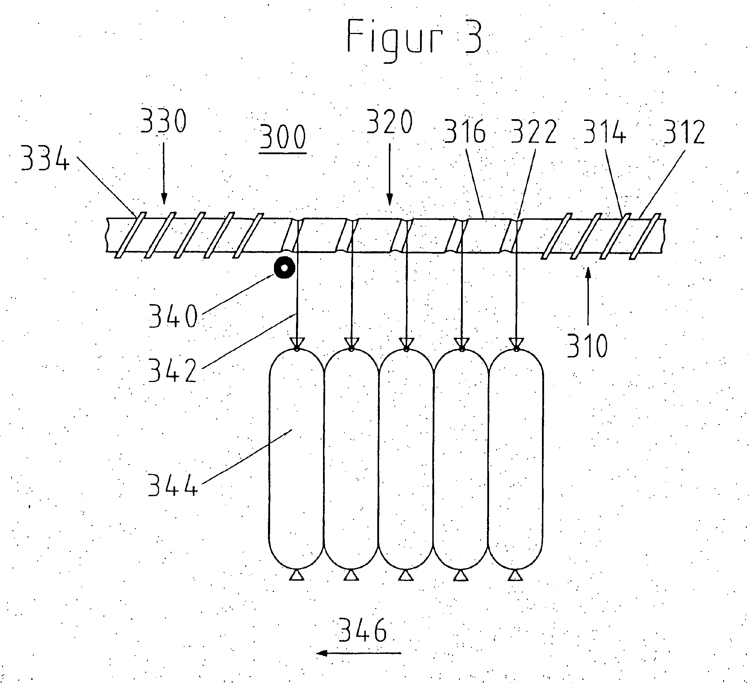

Das in den Fig. 1 und 2 gezeigte Ausführungsbeispiel einererfindungsgemäßen Transportvorrichtung weist eine Welle 100 auf, auf deren Kern 102 eine Schnecke 104, beispielsweise durch Aufschweißen eines um den Kern gewickelten Blechs, angebracht ist. Die Schnecke bildet in diesem Ausführungsbeispiel ein Rechtsgewinde, welches am linken Ende der Welle ausläuft. An dieses Ende kann sich beispielsweise ein zweiter Abschnitt anschließen, wie er unter Bezugnahme auf Fig. 3 weiter unten beschrieben wird.

Die Welle 102 ist über den Außenumfang der Schnecke 104 auf zwei die Lagermittel 110 bildenden Lagerrollen 112, 114 abgestützt. Die Lagerrollen sind spiegelbildlich zu der sich durch die Mittelachse der Welle 100 senkrecht erstreckenden Ebene angeordnet, so dass die Welle gleichgewichtig auf beiden Lagerrollen 112, 114 abgestützt ist. Ferner bilden die beiden Lagerrollen einen in dieser Ebene angeordneten Spalt, durch den die auf dem Kern 102 hängende Schlaufe nach unten zwischen den Lagerrollen 112, 114 heraus geführt wird. Beide Lagerrollen 112, 114 sind ihrerseits auf jeweils einer Achse 116 mittels Kugellagern gelagert. Die Achsen 116 sind an zwei vertikalen und senkrecht zu der durch einen Pfeil 106 gekennzeichneten Transportrichtung angeordneten Lagerhaltern 120, 122 befestigt. Ebenfalls an diesen Lagerhaltern 120, 122 ist eine oberhalb der Welle 100 angeordnete Antriebsrolle 130 gelagert. Diese liegt mit einer an ihrem Außenumfang gebildeten Kontaktfläche 132 auf dem Außenumfang der Schnecke 104 auf und bildet somit mit dieser eine reibschlüssige Verbindung. Der Reibschluss wird vorzugsweise dadurch erhöht, dass die Kontaktfläche 132 gummiert ist. Die Antriebsrolle 130 bildet zusammen mit den Lagerrollen 112, 114 eine sternförmige Anordnung um die Mittelachse der Welle 100 dergestalt, dass hiervon ausgehend die Mittelachsen der Antriebsrolle bzw. der Lagerrollen jeweils einen Winkel einschließen, der kleiner ist als 180°. Dadurch wird die Welle sicher gelagert und gehalten, so dass sie nicht aus der Lagerung herausspringen kann.

Das Antriebsmoment wird in dem gezeigten Ausführungsbeispiel über eine Welle 140 und ein Kardangelenk 142 auf die Antriebsrolle 130 übertragen. Ebenso könnte ein Antriebsmotor auch direkt an den Lagerhalter 122 angeflanscht sein.

Unterhalb der Welle 100 befinden sich im Bereich vor und/oder hinter den Lagermitteln 110 zwei Geländer 150, 152, siehe Fig. 2, die einen im Wesentlichen zentrisch unter der Mittelachse der Welle gelegenen Spalt bilden. Durch diesen Spalt wird die auf dem Kern 102 der Welle 100 transportierte Schlaufe 1.54 hindurch geführt, an der die in Fig. 2 skizzierte Wurst 156 aufgehängt ist. Die Geländer 150, 152 dienen dazu, ein durch die Drehung der Welle 100 möglicherweise verursachtes Pendeln der Wurst 156 zu unterdrücken. Die Geländer weisen an deren Anfang ferner eine Aufweitung oder Gabelung auf (nicht dargestellt), damit die Schlaufen zuverlässig eingefädelt werden: Zusätzlich ist auf der Höhe der Wurst 156 ein weiteres Geländer 160 angeordnet, welches ein Pendeln oder Aufschaukeln der Wurst 156 zusätzlich verhindert.

Die in Fig. 3 gezeigte Ausführungsform der erfindungsgemäßen Welle 300 weist neben einem ersten Abschnitt 310, auf dessen Kern 312 wie oben beschrieben eine Schnecke 314 angebracht ist, einen zweiten Abschnitt 320 auf. Dieser hat im Wesentlichen denselben Kerndurchmesser, ist jedoch durch eine überwindbare Zwangsführung gekennzeichnet, die in Form einer spiralförmigen Einkerbung 322 den Umfang der Welle oder genauer den des Wellenkerns 312 umläuft. Die Einkerbung 322 weist gegenüber der Wellenoberfläche 316 im stumpfem Winkel auslaufende Flanken auf.

Ferner ist in dem in Fig. 3 gezeigten Ausführungsbeispiel ein Stopper 340 vorgesehen, der in den Transportweg des zweiten Abschnitts 320 der Welle 300 eingreift. Dadurch werden auf der Welle 300 an Schlaufen 342 hängende Würste 344 in dem zweiten Abschnitt 320 an einem Weitertransport in die durch einen, Pfeil 346 gekennzeichnete Richtung gehindert. Die Schlaufen können in diesem Abschnitt auf Grund der im stumpfem Winkel gegenüber der Wellenoberfläche 316 auslaufenden Flanken aus der spiralförmigen Einkerbung 322 herausrutschen. Hierdurch kann eine bestimmte Anzahl von Würsten 344 gepuffert werden, ohne eine Beschädigung der Schlaufen 342 zu riskieren. Dies ist insbesondere dann sinnvoll, wenn die Herstellung der Würste und somit deren Zuführung mit einer anderen Taktfrequenz erfolgt als die Abnahme der Würste.

Das in Fig. 3 gezeigt Ausführungsbeispiel der Welle 300 weist ferner einen dritten Abschnitt 330 auf, in dem wiederum auf dem Kern 312 eine Schnecke 334 angebracht ist. Wird der Stopper 340 aus seiner ersten Position, in der er in den Transportweg der Welle 300 eingreift, beispielsweise durch einen pneumatischen Kolbenantrieb in eine zweite Position verfahren, in der er den Transportweg freigibt, können die Würste 344 von dem dritten Abschnitt 330 der Welle 300 weitertransportiert werden. Ferner dient der dritte Abschnitt 330 dazu, die Welle durch zusätzliche Lagermittel abzustützen, um das insb. bei langen Wellen auf die Lager wirkende hohe Biegemoment zu verteilen.

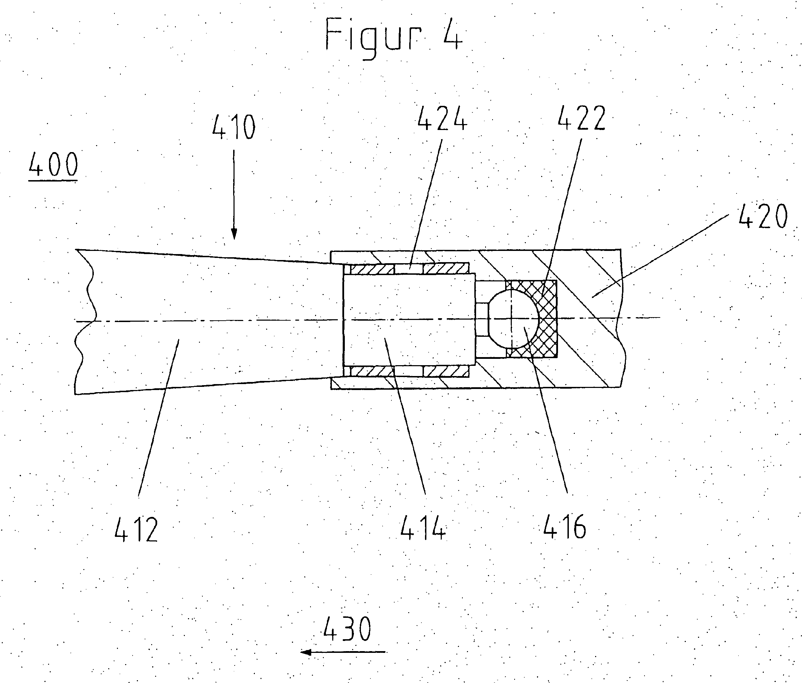

In Fig. 4 ist die mögliche Ausgestaltung des zuführseitigen Anfangs 410 einer Ausführungsform der erfindungsgemäßen Welle 400 gezeigt. Dieses weist einen entgegen der durch einen Pfeil 430 gekennzeichneten Transportrichtung sich verjüngenden Kegelabschnitt 412 auf. Daran schließt sich zur Anlenkung einer sich relativ zur Welle 400 drehbaren, der Welle vorgeschalteten Schlaufenzuführung 420 ein zylindrischer Abschnitt 414 an. Dieser dient als koaxiales Drehlagerelement und wirkt beispielsweise mit einem oder mehreren in einen dem zylindrischen Abschnitt der Welle 400 entsprechenden Abschnitt der Schlaufenzuführung 420 eingelassenen Gleit- oder Rolllagern 424 zusammen. Am äußersten zuführseitigen Anfang 410 der Welle 400 ist eine Kugel 416 als ein Element zur Sicherung gegen eine axiale Relativbewegung zwischen der Welle 400 und der vorgeschalteten Schlaufenzuführung 420 ausgebildet. Diese Kugel rastet in eine in die Schlaufenzuführung 420 eingelassene, teilelastische Kugelpfanne 422 ein. Somit ist sowohl eine koaxiale radiale Drehlagerung als auch eine axiale Sicherung bereitgestellt, die eine relative Ausrichtung der Welle 400 mit der sich daran anschließenden Schlaufenzuführung 420 gewährleistet. Die Schlaufenzuführung 420 kann insbesondere auch ein feststehender Schlaufenaufnehmer sein, der nicht mit der Welle 400 mitrotiert. Andere Formen von Drehlagern und axialen Sicherungen können ebenso vorgesehen werden. Insbesondere kann die Anordnung der Elemente zwischen der Welle und der Schlaufenzuführung auch vertauscht werden, so dass die Welle mit entsprechenden Bohrungen und darin eingelassenen Dreh- oder Gleitlagern als Drehlagerelement und einer entsprechenden Kugelpfanne als Sicherung gegen eine axiale Relativbewegung versehen ist.

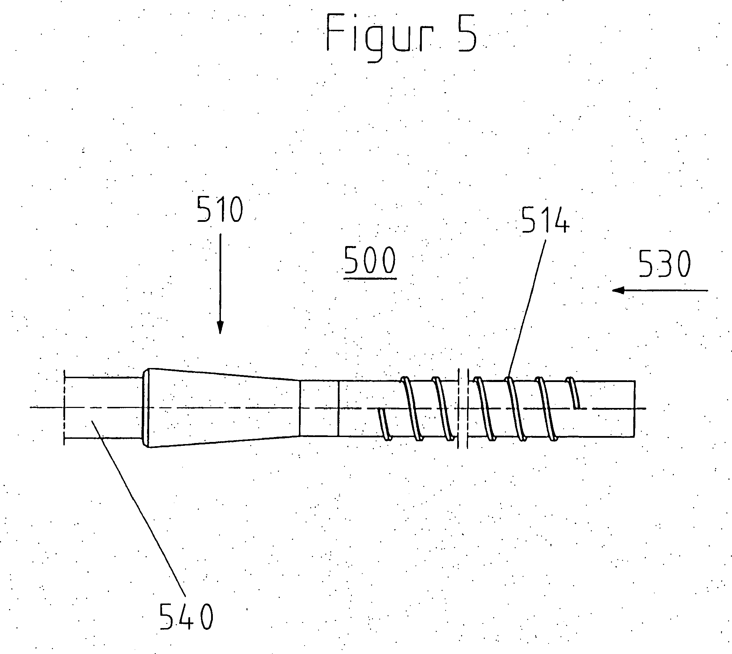

Fig. 5 zeigt eine mögliche Ausgestaltung des abführseitigen Endes 510 eines Ausführungsbeispiels der erfindungsgemäßen Welle 500. Dieses weist einen sich in die durch einen Pfeil 530 gekennzeichnete Transportrichtung aufweitenden Querschnitt auf, über den die von der Schnecke 514 heran transportierten Schlaufen auf eine der Welle 500 nachgeschaltete, mit dieser im Wesentlichen koaxial ausgerichtete Schlaufenabnahme 540, wie z. B. eine Rauchstange, abrutschen kann.

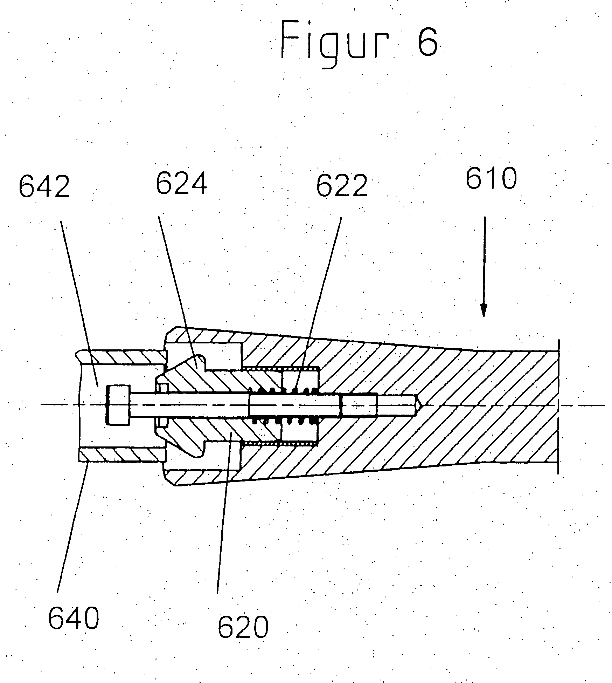

In der in Fig. 6 gezeigten Querschnittsdarstellung ist erkennbar, dass das abführseitige Ende 610 in seinem Inneren einen axial verschieblichen Zentrierdorn 620 aufweist. Dieser ist mittels einer Feder 622 in axialer Richtung vorgespannt und drückt mit seinem kegelförmigen Zentrierkopf 624 in eine Zentralbohrung 642 der nachgeschalteten Schlaufenabnahme 640. Wird beispielsweise eine rohrförmige Rauchstange als nachgeschaltete Schlaufenabnahme 640 verwendet, so bildet deren Innenquerschnitt die Zentralbohrung.

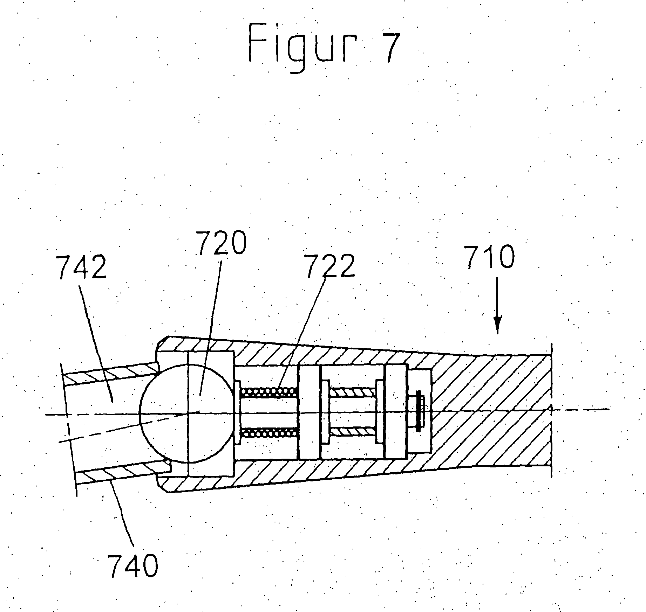

Das in Fig. 7 gezeigte Ausführungsbeispiel weist ein abführseitiges Ende 710 mit einem Zentrierdorn 720 auf, dessen Zentrierkopf kugelförmig oder kugelsegmentförmig ausgebildet ist. Auch dieser Zentrierdorn ist mittels einer Feder 722 in axialer Richtung vorgespannt und dient zum Zentrieren einer nachgeschalteten Schlaufenabnahme 740, wie beispielsweise einer Rauchstange, indem er gegen diese angedrückt wird und in die darin befindliche Zentralbohrung 742 eingreift. Dieses Ausführungsbeispiel erlaubt aufgrund seines Kugelgelenks, dass die Schlaufenabnahme 740 gegenüber der Welle 700 geneigt sein kann, also nicht koaxial ausgerichtet sein muss.

## Patentansprüche

1. Transportvorrichtung zum Transportieren von an Schlaufen oder dergleichen hängenden Gegenständen, insbesondere wurstförmigen Verpackungen, mit einer Welle (100, 300, 400, 500), die einen ersten axialen Abschnitt (310) aufweist, auf dem eine Schnecke (104, 314) angebracht ist, mit Antriebs- und mit Lagermitteln (130, 110, 112) für die Welle, wobei die Antriebsmittel (130) sowie die Lagermittel (110, 112) so angeordnet sind, dass ein Antriebsmoment über den Außenumfang der Schnecke eingeleitet und die Welle über den Außenumfang der Schnecke abgestützt wird, und wobei die Lagermittel (110, 112) unterhalb der Welle einen Spalt zum Durchführen der Schlaufen ausbilden,
**dadurch gekennzeichnet, dass** die Welle (300) einen zweiten Abschnitt (320) mit einer überwindbaren Zwangsführung für die Schlaufen oder dergleichen aufweist.

2. Transportvorrichtung nach Anspruch 1,
**dadurch gekennzeichnet, dass** die Antriebsmittel eine Antriebsrolle (130) mit einer außenumfänglichen Kontaktfläche (132) zur reibschlüssigen Einleitung des Antriebsmoments umfassen.

3. Transportvorrichtung nach Anspruch 2,
**dadurch gekennzeichnet, dass** die Kontaktfläche (132) gummiert ist.

4. Transportvorrichtung nach Anspruch 1,
**dadurch gekennzeichnet, dass** die Antriebsmittel ein Antriebsritzel umfassen und der Außenumfang der Schnecke wenigstens einen axialen Abschnitt mit einer umfänglichen Verzahnung aufweist, der formschlüssig mit dem Antriebsritzel in Eingriff steht.

5. Transportvorrichtung nach einem der Ansprüche 1 bis 4,
**gekennzeichnet durch** zwei Lagerrollen (112, 114), die so angeordnet sind, dass die Welle (100) über den Außenumfang der Schnecke (104) auf den Umfangsflächen der Lagerrollen abgestützt ist.

6. Transportvorrichtung nach einem der Ansprüche 1 bis 5,
**dadurch gekennzeichnet, dass** die überwindbare Zwangsführung in Form einer spiralförmigen Einkerbung (322) um den Umfang der Welle (300) ausgebildet ist, die in stumpfem Winkel gegenüber der Wellenoberfläche (316) auslaufende Flanken aufweist.

7. Transportvorrichtung nach einem der Ansprüche 1 bis 6,
**gekennzeichnet, durch** wenigstens einen Stopper (340) der im Bereich des zweiten Abschnitts (320) der Welle (300) zwischen einer ersten Position, in der er in den Transportweg der Transportvorrichtung eingreift, und einer zweiten Position, in der er den Transportweg freigibt, hin und her bewegbar ist.

8. Transportvorrichtung nach einem der Ansprüche 1 bis 7,
**gekennzeichnet durch** eine Schlaufenführung, die aus zwei unterhalb der Welle (100) angeordneten, einen im Wesentlichen zentrisch unter der Achse der Welle gelegenen Spalt bildenden Geländern (150, 152) besteht.

9. Transportvorrichtung nach einem der Ansprüche 1 bis 8,
**gekennzeichnet durch** ein koaxiales Drehlagerelement (414, 424) am zuführseitigen Anfang (410) der Welle (400).

10. Transportvorrichtung nach Anspruch 9,
**dadurch gekennzeichnet, dass** das koaxiale Drehlagerelement (414, 424) ein Element (416, 422) zur Sicherung gegen eine axiale Relativbewegung aufweist.

11. Transportvorrichtung nach einem der Ansprüche 1 bis 10,
**dadurch gekennzeichnet, dass** das Element zur Sicherung gegen eine axiale Relativbewegung in Form einer Kugelpfanne (422) oder Kugel (416) ausgebildet ist.

12. Transportvorrichtung nach einem der Ansprüche 1 bis 11,
**gekennzeichnet durch** ein Drehlagerelement am abführseitigen Ende (510, 610, 710) der Welle (500) zum Verbinden der Welle (500) mit einer der Welle nachgeschalteten Schlaufenabnahme (540, 640, 740) oder dergleichen.

13. Transportvorrichtung nach Anspruch 12,
**dadurch gekennzeichnet, dass** das Drehlagerelement aus einem axial verschieblichen Zentrierdorn (620, 720) gebildet wird, der in Richtung der der Welle (500) nachgeschalteten Schlaufenabnahme (540, 640, 740) mittels einer Feder (622, 722) vorgespannt ist.

14. Transportvorrichtung nach Anspruch 13,
**dadurch gekennzeichnet, dass** der Zentrierdorn (620, 720) einen kugelsegmentförmigen Zentrierkopf aufweist.

## Claims

1. A transport device for transporting objects hanging on loops or the like, in particular for transporting sausage-shaped packagings, said device comprising a shaft (100, 300, 400, 500) which has a first axial section (310) to which a worm (104, 314) is attached, a drive means and a bearing means (130, 110, 112) for the shaft, said drive means (130) and said bearing means (110, 112) being arranged such that a drive torque is introduced via the outer circumference of the worm and the shaft is supported via the outer circumference of the worm, said bearing means (110, 112) forming a gap under the shaft for feeding through the loops,
**characterised in that** the shaft (300) has a second section (320) provided with a surmountable positive guidance mechanism for the loops or the like.

2. The transport device of claim 1,
**characterised in that** the drive means includes a drive roller (130) provided with an outer circumferential contact surface (132) for frictionally introducing the drive torque.

3. The transport device of claim 2, **characterised in that** the contact surface (132) is rubber-coated.

4. The transport device of claim 1,
**characterised in that** the drive means includes a pinion and the outer circumference of the worm has at least one axial section having circumferential toothing that is in positive engagement with the pinion.

5. The transport device of any of claims 1 to 4,
**characterised by** two bearing rollers (112, 114) which are arranged such that the shaft (100) is supported over the outer circumference of the worm (104) on the circumferential surfaces of the bearing rollers.

6. The transport device of any of claims 1 to 5,
**characterised in that** the surmountable positive guidance mechanism is embodied in the form of a spiral groove (322) about the circumference of the shaft (300), said groove having edges running at an obtuse angle relative to the shaft surface (316).

7. The transport device of any of claims 1 to 6,
**characterised by** at least one stopper (340) that can be moved back and forth in the region of the second section (320) of the shaft (300) between a first position in which it engages in the transport path of the transport device and a second position in which it releases the transport path.

8. The transport device of any of claims 1 to 7,
**characterised by** a loop feeder consisting of two side rails (150, 152) disposed under the shaft (100), which form a gap positioned substantially centrally under the axis of the shaft.

9. The transport device of any of claims 1 to 8, **characterised by** a coaxial rotary bearing assembly (414, 424) at the start (410) of the shaft (400) on the input side.

10. The transport device of claim 9, **characterised in that** the coaxial rotary bearing assembly (414, 424) includes a member (416, 422) for preventing relative axial movement.

11. The transport device of any of claims 1 to 10,
**characterised in that** the member for preventing relative axial movement is embodied in the form of a ball socket (422) or ball (416).

12. The transport device of any of claims 1 to 11,
**characterised by** a rotary bearing assembly at the output end (510, 610, 710) of the shaft (500) for connecting the shaft (500) to a loop receiver (540, 640, 740) or the like which is disposed downstream from the shaft.

13. The transport device of claim 12,
**characterised in that** the rotary bearing assembly is formed by an axially displaceable alignment tool (620, 720) which is biased in the direction of the loop receiver (540, 640, 740) downstream from the shaft (500) by means of a spring (622, 722).

14. The transport device of claim 13, **characterised in that** the alignment tool (620, 720) has an alignment head in the shape of a spherical segment.

## Revendications

1. Dispositif de transport d'objets suspendus à des crochets ou analogues, notamment d'emballages en forme de saucisses, comprenant un arbre (100, 300, 400, 500) qui a un premier tronçon (310) axial sur lequel est monté une vis (104, 314), des moyens (130, 110, 112) d'entraînement et de palier pour l'arbre, les moyens (130) d'entraînement ainsi que les moyens (110, 112) de palier étant disposés de façon à appliquer un couple d'entraînement par le pourtour extérieur de la vis et à soutenir l'arbre par le pourtour extérieur de la vis, et dans lequel les moyens (110, 112) de palier forment, en dessous de l'arbre, un intervalle pour le passage des crochets,
**caractérisé en ce que** l'arbre (300) a un deuxième tronçon (320) ayant un guidage forcé, qui peut être surmonté, des crochets ou analogues.

2. Dispositif de transport suivant la revendication 1,
**caractérisé en ce que** les moyens d'entraînement comprennent un galet (130) d'entraînement, ayant une surface (132) de contact périphérique extérieure pour l'application à frottement du couple d'entraînement.

3. Dispositif de transport suivant la revendication 2,
**caractérisé en ce que** la surface (132) de contact est caoutchoutée.

4. Dispositif de transport suivant la revendication 1,
**caractérisé en ce que** les moyens d'entraînement comprennent un pignon d'entraînement et le pourtour extérieur de la vis a au moins un tronçon axial ayant une denture périphérique qui engrène à complémentarité de forme avec le pignon d'entraînement.

5. Dispositif de transport suivant l'une des revendications 1 à 4,
**caractérisé par** deux galets (112, 114) de palier, qui sont disposés de façon à ce que l'arbre (100) s'appuie par le pourtour extérieur de la vis (104) sur la surface périphérique des galets de palier.

6. Dispositif de transport suivant l'une des revendications 1 à 5,
**caractérisé en ce que** le guidage forcé, pouvant être surmonté est constitué sous la forme d'une encoche (322) en forme de spirale sur le pourtour de l'arbre (300), encoche qui a des flancs faisant un angle obtus avec la surface (316) de l'arbre.

7. Dispositif de transport suivant l'une des revendications 1 à 6,
**caractérisé par** au moins une butée (340) qui peut aller et venir dans la partie du deuxième tronçon (320) de l'arbre (300) entre une première position dans laquelle elle pénètre dans la voie de transport du dispositif de transport et une deuxième position dans laquelle elle dégage la voie de transport.

8. Dispositif de transport suivant l'une des revendications 1 à 7,
**caractérisé par** un guidage de crochets, qui est constitué de deux garde-fous (150, 152) disposés en dessous de l'arbre (100) et formant un intervalle sensiblement centré sous l'axe de l'arbre.

9. Dispositif de transport suivant l'une des revendications 1 à 8,
**caractérisé par** un élément (414, 424) coaxial de palier tournant sur le début (410) du côté de l'entrée de l'arbre (400) .

10. Dispositif de transport suivant la revendication 9,
**caractérisé en ce que** l'élément (414, 424) coaxial de palier tournant a un élément (416, 422) l'empêchant d'effectuer un mouvement axial relatif.

11. Dispositif de transport suivant l'une des revendications 1 à 10,
**caractérisé en ce que** l'élément empêchant d'effectuer un mouvement axial relatif est constitué sous la forme d'un coussinet sphérique (422) ou d'une bille (416).

12. Dispositif de transport suivant l'une des revendications 1 à 11,
**caractérisé par** un élément de palier tournant à l'extrémité (510, 610, 710) de sortie de l'arbre (500) pou relier l'arbre (500) à un prélèvement (540, 640, 740) de crochet ou analogue monté en aval de l'arbre.

13. Dispositif de transport suivant la revendication 12,
**caractérisé en ce que** l'élément de palier tournant est formé d'un mandrin (620, 720) de centrage coulissant axialement, qui est mis, au moyen d'un ressort, (622, 722) sous tension préalable dans la direction du prélèvement (540, 640, 740) de crochet monté en aval de l'arbre (500).

14. Dispositif de transport suivant la revendication 13,
**caractérisé en ce que** le mandrin (620, 720) de centrage a une tête de centrage en forme de segment de sphère.
